Europäisches Patentamt

European Patent Office

Office européen des brevets

(11) Numéro de publication : **0 649 101 A1**

(12) **DEMANDE DE BREVET EUROPEEN**

(21) Numéro de dépôt : **94402324.1**

(22) Date de dépôt : **18.10.94**

(51) Int. Cl.$^6$ : **G06F 15/80**

(30) Priorité : **18.10.93 FR 9312368**

(43) Date de publication de la demande :
**19.04.95 Bulletin 95/16**

(84) Etats contractants désignés :
**DE ES GB IT**

(71) Demandeur : **FRANCE TELECOM**
**6, Place d'Alleray**
**F-75015 Paris (FR)**

(72) Inventeur : **Privat, Gilles**
**1, avenue du Vercors**
**F-38240 Meylan (FR)**
Inventeur : **Planet, Patricia**
**17, avenue Jean Perrot**
**F-38100 Grenoble (FR)**
Inventeur : **Renaudin, Marc**
**4 le clos de la Grivelière**
**F-88330 Biviers (FR)**

(74) Mandataire : **Casalonga, Axel**
**BUREAU D.A. CASALONGA - JOSSE**
**Morassistrasse 8**
**D-80469 München (DE)**

(54) **Procédé de fonctionnement en parallèle de plusieurs unités de calcul, notamment en traitement d'images, et architecture correspondante.**

(57)    Lorsque plusieurs unités de calcul destinées ensemble à évaluer de façon itérative et cellulaire les valeurs de convergence d'une pluralité de variables respectivement associées aux différents points d'un maillage prédéterminé chaque variable devant satisfaire à une relation itérative préétablie entre elle-mêmes et n variables voisines associées à n points de maillage voisins (P2-P5),

— on affecte un moyen de mémoire par point du maillage, destiné à stocker successivement toutes les valeurs de la variable associée à ce point de maillage,

— on répartit les unités de calcul de façon à affecter tout point de maillage à une unité de calcul et deux unités de calcul distinctes à deux points voisins choisis du maillage,

— on fait fonctionner toutes les unités de calcul en parallèle et indépendamment les unes des autres,

    et pour chaque point courant du maillage,

. on fait calculer par l'unité de calcul affectée à ce point courant chaque valeur successive de la variable associée à ce point courant à partir de la valeur contenue dans le moyen de mémoire affecté au point courant et de celles disponibles et issues des moyens de mémoire affectés aux points voisins du point courant, quels que soient les rangs d'itération auxquels correspondent ces valeurs disponibles, et

. on fait stocker, par ladite unité de calcul, chaque nouvelle valeur ainsi calculée dans le moyen de mémoire associé au point courant.

FIG.2

EP 0 649 101 A1

L'invention concerne le fonctionnement mutuel de plusieurs unités de calcul destinées ensemble à évaluer de façon itérative et cellulaire les valeurs de convergence d'une pluralité de variables respectivement associées aux différents points d'un maillage prédéterminé.

L'invention s'applique avantageusement mais non limitativement au traitement d'images, notamment d'images de télévision.

Les algorithmes de type itératif opérant sur un maillage prédéterminé se rencontrent dans un très grand nombre d'applications dont le traitement d'images. ns permettent d'effectuer un traitement global sur l'ensemble du maillage mais de façon cellulaire, c'est-à-dire avec seulement une interaction locale. En effet, chaque variable associée à un point du maillage doit satisfaire à une relation itérative préétablie entre elle-même et seulement n variables voisines associées à n points de maillage voisins. De tels algorithmes itératifs et cellulaires opérant sur un maillage prédéterminé pour aboutir à des valeurs de convergence sont du type "à relaxation" selon une dénomination couramment utilisée par l'homme du métier.

Les algorithmes de traitement d'images de type itératif et cellulaire peuvent ainsi par exemple opérer sur une image globale spatialement échantillonnée en mailles carrées avec un voisinage d'ordre 1. La relation préétablie à laquelle devra satisfaire chaque variable, associée en l'espèce à chaque pixel courant d'image, implique alors cinq pixels, à savoir le pixel courant à l'itération précédente et les quatre voisins immédiats de ce pixel courant.

Les modèles cellulaires itératifs se prêtent a priori à une implémentation massivement parallèle de chaque itération en allouant un processeur élémentaire de l'architecture à chaque pixel. Ces processeurs vont donc évaluer ensemble de façon itérative et cellulaire les valeurs de convergence des différentes variables respectivement associées aux différents pixels de l'image maillée.

On connaît des architectures parallèles d'unités de calcul qui fonctionnent de façon totalement synchrone les unes par rapport aux autres. Cependant, l'implémentation à très grande échelle d'une architecture devant fonctionner de manière rigoureusement synchrone pose des problèmes quand la fréquence d'horloge, commune à toutes les unités de calcul, augmente. En effet, les décalages des fronts de l'horloge entre les différents points du circuit peuvent devenir non négligeables par rapport à la période et contraindre donc un ralentissement global du fonctionnement de l'architecture. Ainsi, il est difficile d'utiliser une horloge ayant une fréquence de l'ordre de la centaine de MHz avec un circuit dont la taille est de l'ordre du $cm^2$. En outre, si le synchronisme des architectures classiques apparaît comme une solution naturelle pour l'homme du métier, il pose également des problèmes de convergence. En effet, il s'avère préférable de ne pas mettre à jour simultanément des variables interdépendantes, ce qui conduit alors à utiliser une partition en damier de l'image. On obtient donc une architecture d'unités de calcul qui ne fonctionne plus de façon totalement parallèle puisque seule la moitié des unités de calcul est active simultanément, dans l'hypothèse où l'on affecte une unité de calcul à chaque pixel.

La deuxième solution qui s'offre à l'homme du métier pour l'implémentation de tels algorithmes itératifs cellulaires est une solution totalement asynchrone. Dans une telle optique, et si l'on suppose qu'il soit possible d'affecter un processeur par pixel de l'image, chaque processeur travaille alors selon sa propre cadence, indépendamment des autres, mais doit néanmoins, pour le calcul de sa variable à un rang d'itération donné, utiliser les variables calculées par les autres processeurs à des rangs appropriés d'itérations compte tenu de la relation préétablie entre les différentes variables. Ceci nécessite donc une gestion de l'asynchronisme et des processus de requête-acquittement pour le dialogue entre les différents processeurs et l'échange des variables appropriées en vue de la détermination correcte de chaque variable au sein de chaque processeur. On ne connaît pas actuellement de mise en oeuvre pratique d'une telle solution, notamment en traitement d'images réelles avec un processeur par pixel. En effet, des processeurs en mesure de gérer un tel asynchronisme de manière totalement générale, doivent être des microprocesseurs à haute performance et donc à fort encombrement de surface. En d'autres termes, la gestion de l'asynchronisme et des processus de requête-acquittement entre processeurs d'une telle architecture est perçue par l'homme du métier comme incompatible avec une fine granularité (la granularité correspondant au nombre de pixels gérés par une unité de calcul; la granularité la plus fine étant l'association d'une unité de calcul par pixel).

L'invention vise à remédier à ces inconvénients de l'état de la technique.

Un but de l'invention est de proposer un fonctionnement parallèle de plusieurs unités de calcul qui soit notamment compatible avec une fine granularité et qui autorise une vitesse élevée de fonctionnement.

L'invention propose donc tout d'abord un procédé de réalisation d'un pseudo-asynchronisme de fonctionnement entre plusieurs unités de calcul destinées ensemble à évaluer de façon itérative et cellulaire les valeurs de convergence d'une pluralité de variables respectivement associées aux différents points d'un maillage prédéterminé, chaque variable devant satisfaire à une relation itérative préétablie entre elle-même et n variables voisines associées à n points de maillage voisins; selon ce procédé :

- on affecte un moyen de mémoire par point du maillage, destiné à stocker successivement toutes les valeurs de la variable associée à ce point,
- on répartit les unités de calcul de façon à affecter tout point du maillage à une unité de calcul et deux unités de calcul distinctes à au moins deux points voisins choisis du maillage,
- on fait fonctionner toutes les unités de calcul en parallèle et indépendamment les unes des autres, et pour chaque point courant du maillage,
  . on fait calculer par l'unité de calcul affectée à ce point courant chaque valeur successive de la variable associée à ce point courant à partir de la valeur contenue dans le moyen de mémoire affecté au point courant et de celles disponibles et issues des moyens de mémoire affectés aux points voisins du point courant, quels que soient les rangs d'itération auxquels correspondent ces valeurs disponibles, et
  . on fait stocker, par ladite unité de calcul, chaque nouvelle valeur ainsi calculée dans le moyen de mémoire associé au point courant.

Selon l'invention, le terme "variable" doit être pris dans un sens très large, englobant notamment une ou plusieurs composantes d'un ou de plusieurs vecteurs.

La répartition des unités de calcul est telle que chaque point de maillage est géré par une unité de calcul. Mais une même unité de calcul peut gérer éventuellement plusieurs points. Cependant, l'homme du métier comprend aisément que, puisque la répartition des unités de calcul prévoit d'affecter deux unités de calcul distinctes à au moins deux points voisins choisis du maillage, il en résulte donc nécessairement, qu'à au moins un instant de l'évaluation globale des valeurs de convergence de toutes les variables, le calcul des variables successives d'au moins un point courant du maillage par l'unité de calcul qui lui est affectée, nécessite d'utiliser au moins une valeur disponible dans un moyen de mémoire affecté à au moins un point voisin de ce point courant et auquel est affectée une unité de calcul distincte de celle mentionnée ci-avant.

Or, selon l'invention, le rang d'itération auquel correspond cette valeur de variable voisine est non nuisible au calcul de la variable courante. En d'autres termes l'unité de calcul traitant la variable courante va utiliser une information transmise par l'unité de calcul voisine lorsqu'elle arrive et lorsque ladite unité de calcul en a besoin. L'homme du métier comprend donc que ceci peut conduire à utiliser deux fois la même valeur voisine si l'unité de calcul voisine est trop lente ou bien à utiliser une variable voisine dont le rang d'itération est plus élevé que celui qui correspondrait théoriquement à la relation préétablie à laquelle doivent satisfaire les variables au sein de chaque cellule.

On ne force donc pas de lien de cohérence causale entre des unités de calcul voisines. Aussi le pseudo-asynchronisme de fonctionnement de l'invention, ou asynchronisme fonctionnel, entre les différentes unités de calcul, se traduit par le fait que chaque unité de calcul, par exemple un processeur élémentaire, effectue ses propres tâches sans tenir compte des unités de calcul voisines, notamment si l'unité de calcul considérée est en avance ou en retard par rapport aux autres.

Si l'expression "quels que soient les rangs d'itération auxquels correspondent ces valeurs disponibles" prend tout son sens lorsque ces valeurs disponibles sont évaluées par une ou plusieurs unités de calcul distinctes de celle gérant le point courant, elle n'en demeure pas moins exacte même si au moins une de ces valeurs disponibles est évaluée par la même unité de calcul que celle affectée à la variable courante. Bien entendu, dans ce cas l'homme du métier comprendra que le rang d'itération correspondant à la variable voisine n'est cependant pas quelconque puisque cette variable voisine et la variable courante sont gérées par la même unité de calcul.

Il convient par ailleurs de noter que l'invention prévoit ici quasi-systématiquement de modifier, en raison de l'asynchronisme fonctionnel, la relation préétablie entre les différentes variables au niveau des rangs d'itération utilisés, lorsque des unités de calcul distinctes sont impliquées pour le calcul de ces différentes variables. Or, il a été observé que cette modification de ladite relation conduisait également à l'obtention de valeurs de convergence pour les différentes variables.

L'homme du métier remarque donc qu'un tel pseudo asynchronisme de fonctionnement, ou asynchronisme fonctionnel, se distingue bien évidemment d'un fonctionnement synchrone mais aussi d'un fonctionnement asynchrone au sens classique du terme qui nécessite un contrôle global pour superviser les échanges de données entre les différentes unités de calcul. Le pseudo asynchronisme de fonctionnement selon l'invention, se dispense de l'utilisation d'une telle supervision globale et donc de l'utilisation de protocoles d'échange entre les différentes unités de calcul, lourds et coûteux à mettre en oeuvre matériellement.

En outre, au sens de la présente invention, une variable est disponible, si la prise en compte de sa valeur par une unité de calcul n'affecte pas le traitement d'évaluation effectué par cette unité de calcul. Ainsi, afin notamment d'éviter qu'une première unité de calcul ne soit en train de mettre à jour le moyen de mémoire correspondant par la nouvelle valeur calculée pour la variable associée au point courant géré par cette première unité de calcul, au moment précis où une deuxième unité de calcul cherche à lire le contenu du moyen de mémoire affecté à ce point courant, ce qui pourrait donner un résultat aléatoire, il est avantageusement prévu que la première unité de calcul interdise la prise en compte, par la deuxième unité de calcul, de la nouvelle valeur calculée, lorsque la première unité de calcul met à jour le moyen de mémoire associé au point courant; la deuxième unité de calcul prend alors en compte l'ancienne valeur stockée dans ce moyen mémoire.

Selon un premier mode de mise en oeuvre de l'invention, on peut affecter une unité de calcul différente par point par maillage.

Il est également possible d'affecter chaque unité de calcul à un groupe de p points du maillage. Dans ce cas, à l'intérieur de chaque groupe de points, l'unité de calcul correspondante détermine avantageusement les valeurs successives de chaque point du groupe séquentiellement dans un ordre prédéterminé. Néanmoins, toutes les unités de calcul des groupes voisins fonctionnent en parallèle et de façon pseudo-asynchrone par rapport à cette unité de calcul. On obtient donc un fonctionnement localement séquentiel (au sein de chaque groupe) mais globalement parallèle. Un tel fonctionnement localement séquentiel globalement parallèle se distingue d'un fonctionnement localement parallèle et globalement séquentiel, connu dans l'état de la technique, qui prévoit d'effectuer en parallèle les calculs correspondant à un groupe de variables puis de balayer séquentiellement l'ensemble du maillage. Cependant, cette technique classique cause d'importants problèmes d'entrée/sortie pour les architectures à fine granularité. En effet, l'homme du métier sait que, par l'effet de la propagation de valeurs erronées à partir des bords de la partition envisagée, le nombre de variables, dont la valeur au bout de It itérations sera correcte, est de l'ordre $(N-It)^2$ où N désigne la taille de la partition, et qu'il apparaît alors un goulot d'étranglement qui limite le nombre d'utilisations successives d'une variable. Un fonctionnement localement séquentiel globalement parallèle tel qu'il est prévu dans un mode particulier de réalisation de l'invention, permet de s'affranchir de ces problèmes.

Dans une application particulière de l'invention dans laquelle on effectue un maillage d'une image, par exemple d'une image de télévision, chaque point correspond à pixel de l'image et la relation préétablie correspond alors à un traitement particulier de cette image tel que par exemple une estimation de mouvement, ou un débruitage.

L'invention a également pour objet une architecture parallèle pseudo-asynchrone d'unités de calcul, destinées ensemble à évaluer de façon itérative et cellulaire les valeurs de convergence d'une pluralité de variables respectivement associées aux différents points d'un maillage prédéterminé, chaque variable devant satisfaire à une relation itérative préétablie entre elle-même et n variables voisines associées à n points de maillage voisins; une telle architecture comporte une répartition des unités de calcul affectant tout point du maillage à une unité de calcul et deux unités de calcul distinctes à au moins deux points voisins choisis du maillage; par ailleurs, cette architecture comprend :

- un premier moyen de mémoire, associé à chaque point courant du maillage, pour stocker successivement toutes les valeurs de la variable courante du point courant, et apte à être connecté à l'unité de calcul affectée à ce point courant,
- n moyens de transfert, respectivement reliés aux n premiers moyens de mémoire affectés aux n points voisins de chaque point courant, et aptes à délivrer respectivement, à l'unité de calcul affectée audit point courant, n valeurs disponibles tirées de celles contenues dans les n premiers moyens de mémoire,
- des moyens de commande du fonctionnement de chaque unité de calcul, aptes à faire fonctionner toutes les unités de calcul en parallèle et indépendamment les unes des autres,
- des moyens de traitement, respectivement incorporés au sein de chaque unité de calcul, et respectivement aptes, à partir de la valeur contenue dans le premier moyen de mémoire du point courant et de celles délivrées par les n moyens de transfert correspondants, quels que soient les rangs d'itération auxquels correspondent ces valeurs délivrées,
  . à déterminer une nouvelle valeur pour la variable associée au point courant,
  . et à stocker cette nouvelle valeur dans ledit premier moyen de mémoire du point courant.

Selon un mode de réalisation de l'invention, un moyen de transfert relié à un premier moyen de mémoire d'un point du maillage auquel est affectée une première unité de calcul, et apte à délivrer une valeur disponible tirée de celle contenue dans ce premier moyen de mémoire, à une deuxième unité de calcul affectée à un point voisin et distincte de la première, comporte des moyens d'interdiction de la délivrance de la valeur de la variable en train d'être mise à jour dans le premier moyen de mémoire par la première unité de calcul, le moyen de transfert délivrant alors à la deuxième unité de calcul l'ancienne valeur stockée dans le premier moyen de mémoire. Les moyens d'interdiction sont avantageusement commandés par un signal d'interdiction généré par la première unité de calcul et issu du signal de commande d'écriture de la nouvelle valeur calculée dans le premier moyen de mémoire.

Selon un mode de réalisation de l'invention, le moyen de transfert comporte une mémoire à verrouillage (Latch en langue anglaise) commandée par le signal de commande de lecture de la deuxième unité de calcul, tandis que les moyens d'interdiction comportent une porte logique ET, recevant en entrée le signal de commande de lecture et le signal d'interdiction, et connectée en sortie à la mémoire à verrouillage.

D'autres avantages et caractéristiques de l'invention apparaîtront à l'examen de la description détaillée de modes de réalisation et de mise en oeuvre de l'invention nullement limitatifs et illustrés sur les dessins annexés sur lesquels :

- la figure 1 représente un maillage particulier d'une image,
- la figure 2 illustre schématiquement deux unités de calcul d'une architecture selon l'invention,
- la figure 3 illustre schématiquement la connexion entre les différentes unités de calcul de l'architecture,
- la figure 4 représente schématiquement un élément de mémoire particulier associé à une unité de calcul,
- la figure 5 illustre un autre partitionnement particulier de l'image permettant une mise en oeuvre de l'invention selon un fonctionnement localement séquentiel globalement parallèle, et,
- la figure 6 illustre très schématiquement un mode de réalisation d'une architecture correspondant au partitionnement de la figure 5.

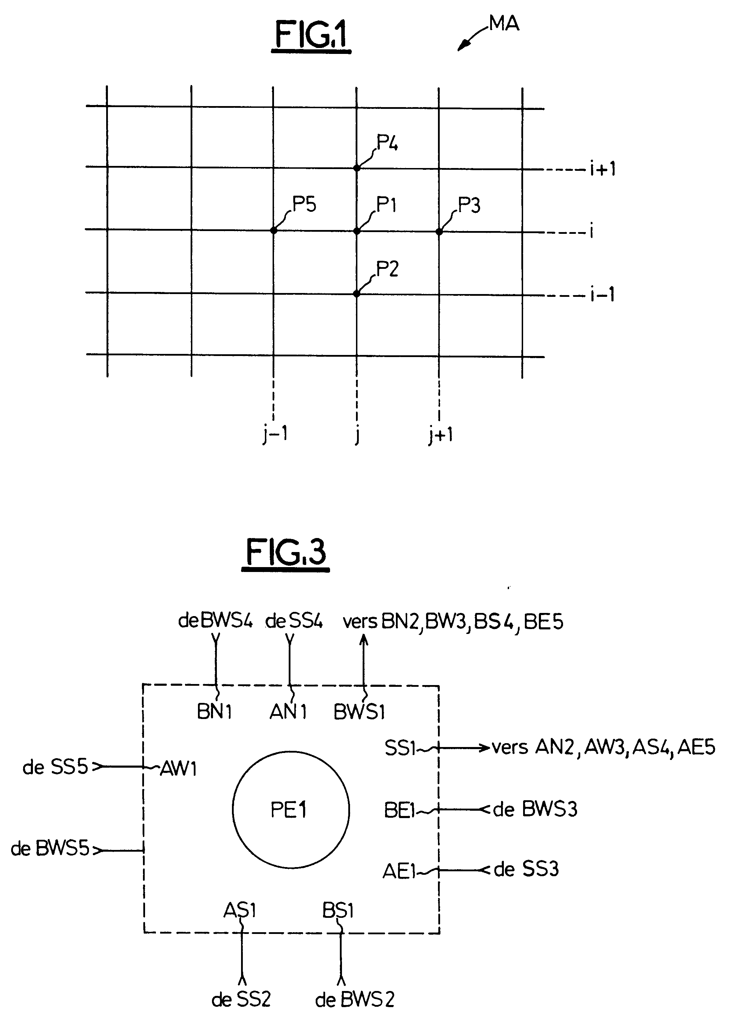

Bien que, comme mentionné plus haut, l'invention ne soit pas limitée au traitement d'image, on suppose maintenant que le maillage MA illustré sur la figure 1 correspond à un maillage d'une image, telle qu'une image de télévision, échantillonnée spatialement avec des mailles carrées. Les points P1, P2, P3, P4 et P5 représentent alors des pixels de l'image. On suppose également dans cet exemple, que la variable associée à chaque pixel doit satisfaire à la relation itérative préétablie donnée en annexe et correspondant à une estimation de mouvement. Dans cette relation, qui prévoit un voisinage d'ordre 1 (c'est-à-dire qui fait intervenir ici cinq variables associées respectivement à un pixel courant P1 et aux quatre pixels voisins P2, P3, P4 et P5), la variable associée à un pixel comporte les composantes horizontale et verticale $d_j$ et $d_i$ du vecteur déplacement de ce pixel; k désigne le rang de l'itération, $N_{ij}$ représente la cellule de cinq pixels, $E_i$ et $E_j$ sont les composantes du gradient spatial de luminance et T désigne un paramètre ajustable et assimilable par analogie à une température.

Dans la suite du texte, et à des fins de simplification, tous les éléments se rapportant au pixel courant de coordonnées (i, j) auront des références se terminant par le chiffre 1. De même, tous les éléments se rapportant au pixel voisin du pixel P1, et ayant comme coordonnées (i-1, j), auront des références se terminant par le chiffre 2. Le chiffre terminal 3 correspondra aux coordonnées (i, j+1) et les chiffres terminaux 4 et 5 correspondront respectivement aux coordonnées i+1, j et i, j-1.

On suppose maintenant conformément à un premier mode de réalisation de l'invention, qu'il y a autant d'unités de calcul que de pixels du maillage, chaque unité de calcul étant affectée à un pixel.

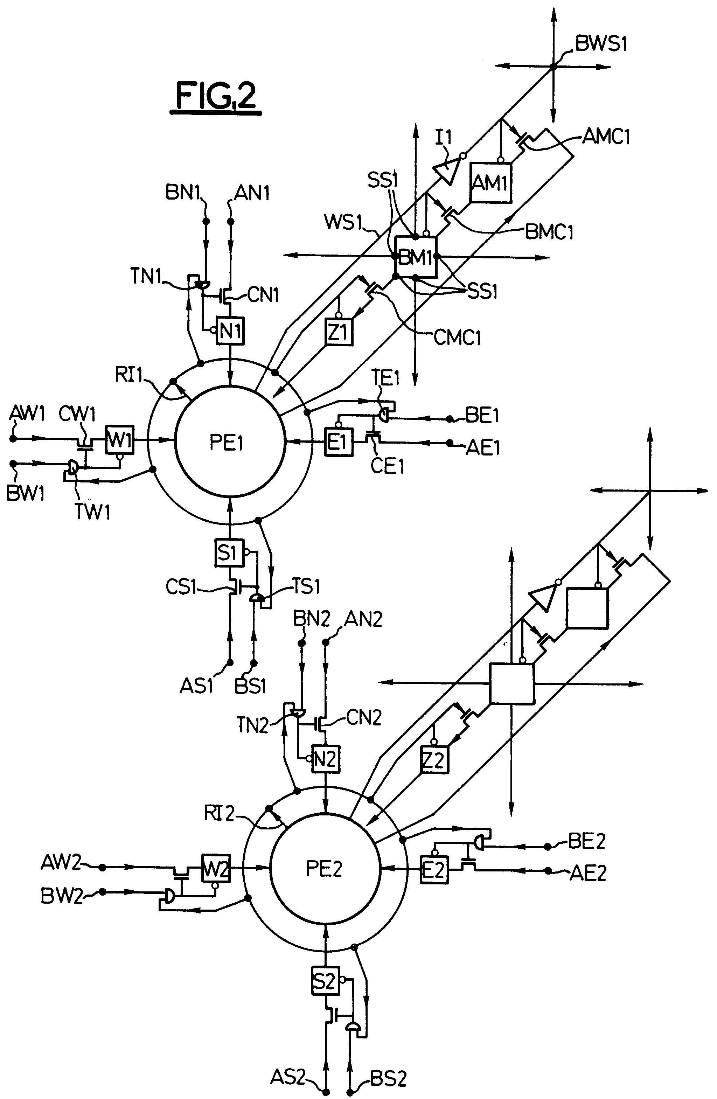

On a représenté sur la figure 2, à des fins de simplification, uniquement les deux unités de calcul PE1 et PE2, ainsi que leurs moyens associés, affectés respectivement aux pixels P1 et P2. Bien que d'une façon générale, le terme "unité de calcul" doive être interprété dans un sens vaste, englobant éventuellement un microprocesseur, chaque unité de calcul est constituée ici d'un processeur élémentaire de complexité assez faible (quelques éléments logiques). Chaque processeur est cadencé par ses propres moyens de commande et sa propre horloge, indépendamment des autres. (Ces moyens ne sont pas illustrés à des fins de simplification).

On va maintenant décrire en détail les différents moyens associés au processeur PE1 sachant tous les autres processeurs ont des moyens analogues.

Le processeur PE1 est relié à plusieurs éléments de mémoire référencés N1, E1, S1, W1, Z1, BM1 et AM1.

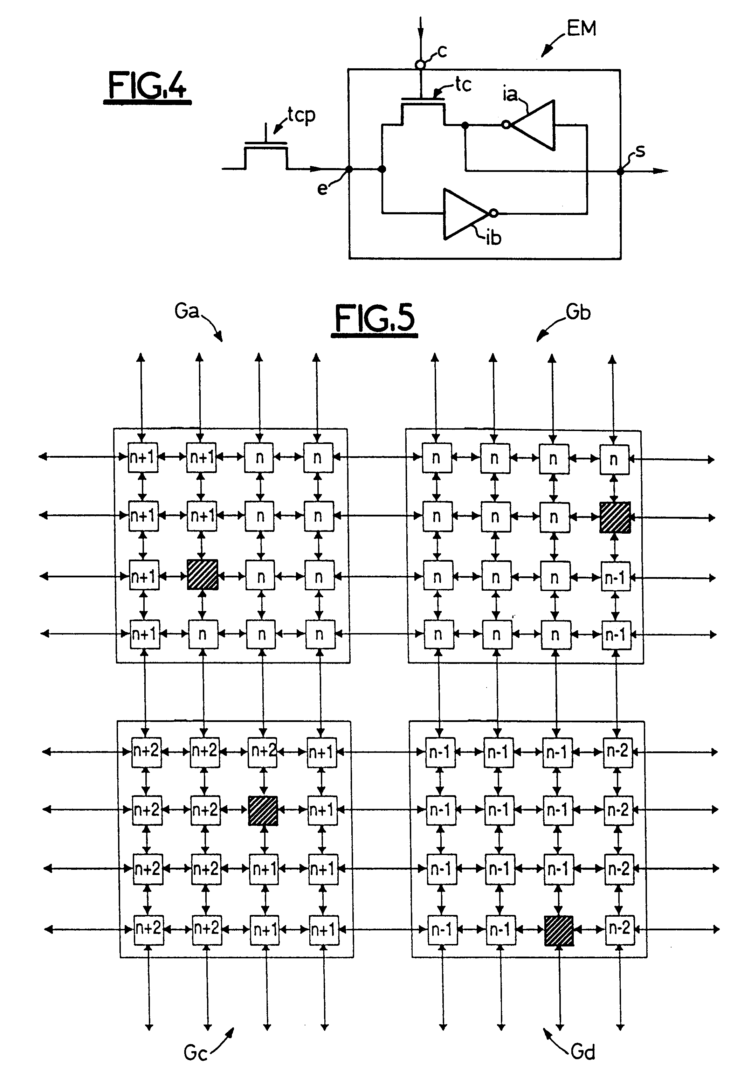

Les différents éléments de mémoire sont respectivement précédés de moyens de commutation commandables CN1, CE1, CS1, CW1, CMC1, BMC1, AMC1, tels que par exemple des transistors à effet de champ. Bien qu'il soit possible d'utiliser différentes structures de point mémoire, il a été utilisé dans le cas présent, pour tous ces éléments de mémoire, celui référencé EM de façon générique, sur la figure 4. Cet élément de mémoire, comporte une entrée de donnée e, une sortie de donnée s et une entrée de commande c. Cet élément de mémoire comporte entre l'entrée e et la sortie s deux inverseurs ia et ib rebouclés mutuellement par l'intermédiaire d'un moyen de commutation tc commandable, tel qu'un transistor à effet de champ. La grille de ce transistor à effet de champ est relié à l'entrée de commande inverseuse c. En fonctionnement lorsque la valeur "1" est présente en amont de l'entrée de commande c, correspondant à une valeur "0" sur la grille du transistor, celui-ci est bloqué et il devient passant lorsqu'une information binaire ayant le niveau logique "0" est présente en amont de l'entrée inverseuse c.

Lorsqu'il est associé au moyen de commutation tcp situé en amont de son entrée e, et commandé complémentairement par rapport au moyen de commutation tc, l'élément de mémoire EM se comporte comme une mémoire à verrouillage de type D. En effet, lorsque le transistor tcp est passant et que le transistor tc est bloqué il y a recopie (transfert) à la sortie s de la donnée arrivant à l'entrée e. Par contre lorsque le transistor tcp est bloqué et que le transistor tc est passant, la donnée présente en entrée e, juste avant le blocage du transistor tcp, est mémorisée dans la boucle de mémorisation formée par les deux inverseurs, jusqu'au moment où le transistor tcp redevient passant.

Ces mémoires à verrouillage sont celles formées par les éléments (N1, CN1); (E1, CE1); (S1, CS1); (W1, CW1) et (Z1, CNC1).

Lorsque deux éléments de mémoire EM et leur transistor associé tcp sont connectés en série, on obtient une bascule D maître-esclave. C'est le cas de la bascule (AMC1, AM1, BMC1, BM1).

Les moyens de mémoire représentés ici à des fins de simplification ne peuvent stocker qu'un seul bit de donnée. En fait, il est prévu plusieurs moyens de ce type connectés en parallèle et associés à des chemins de données lorsque, comme c'est généralement le cas, les variables comportent plusieurs bits.

D'une façon générale, si l'on se reporte plus particulièrement à la figure 2, le microprocesseur PE1 est relié à un premier moyen de mémoire destiné à stocker successivement toutes les valeurs de la variable calculée par le processeur PE1, ainsi qu'à n (ici 4) moyens de transfert destinés à délivrer successivement respectivement toutes les valeurs disponibles des n variables voisines de la variable considérée. Comme on le verra, outre le fait que chacun de ces moyens de transfert sont reliés au processeur PE1, ils sont respectivement également reliés aux unités de calcul PE2, PE3, PE4, PE5 affectées au n points voisins.

Alors que les moyens de transfert sont respectivement composés des mémoires à verrouillage (N1, CN1), (E1, CE1), (S1, CS1) et (W1, CW1), le premier moyen de mémoire comporte ici la bascule D maître-esclave dont l'entrée est reliée au processeur PE1 et dont la sortie SS1, c'est-à-dire la sortie du deuxième élément de mémoire BM1, est reliée à la mémoire à verrouillage (Z1, CMC1). Le transistor CMC1 est commandé par un signal de lecture RI1 émis par le processeur PE1. Ce signal de lecture est également relié à l'entrée de commande de l'élément de mémoire Z1. Un autre signal WS1 est susceptible de commander le transistor BMC1 et l'entrée de commande de l'élément de mémoire BM1, ainsi que, par l'intermédiaire d'un inverseur I1, le transistor AMC1 et l'entrée de commande de l'élément de mémoire AM1. Par ailleurs, ce signal WS1 est diffusé, comme on le verra plus en détail ci-après, aux processeurs voisins, ce que l'on a représenté schématiquement par l'intermédiaire d'une borne BWS1 et de quatre flèches.

De même, la valeur contenue dans l'élément de mémoire BM1, est destinée à être transférée non seulement dans l'élément de mémoire Z1, mais également dans les mémoires à verrouillage des processeurs voisins. Aussi, bien que l'élément de mémoire BM1 n'ait en fait qu'une seule sortie SS1, celle-ci a été représentée cinq fois à des fins de simplification, les quatre flèches partant de quatre de ces bornes représentant la diffusion de la valeur contenue dans l'élément de mémoire BM1, aux processeurs voisins.

De même que tous les éléments associés au pixel P1 de coordonné (i, j) ont des références se terminant par le chiffre 1, tous les éléments respectivement associés aux quatre moyens de mémoire N1, E1, S1 et W1 ont des références dont l'avant dernier signe est respectivement égal à N,E,S et W. A des fins de simplification, on ne décrira ici que les éléments associés au moyen de mémoire N1 sachant que les autres moyens de mémoire E1, S1 et W1 sont affectés de moyens analogues.

On a représenté, en amont de l'élément de mémoire N1 deux bornes BN1 et AN1. L'entrée de donnée de l'élément de mémoire N1 est reliée à la borne AN1 par le transistor à effet de champ CN1. La commande (grille) de ce transistor CN1 est reliée à la sortie d'une porte logique ET, TN1. La sortie de la porte ET est également connectée à l'entrée de commande inverseuse de l'élément de mémoire N1. Une première entrée de la porte logique TN1 est reliée à la borne BN1 tandis que la deuxième entrée de cette porte logique est destinée à recevoir le signal de lecture RI1 émis par le processeur PE1.

La connexion des différentes bornes est illustrée sur la figure 3. Ainsi, les bornes BN1 et AN1 sont reliées aux bornes BWS4 et SS4 tandis que les bornes BE1 et AE1 sont respectivement reliées aux bornes BWS3 et SS3, et que les bornes AS1 et BS1 sont reliées aux bornes SS2 et BWS2 tandis que les bornes AW1 et BW1 sont reliées aux bornes SS5 et BWS5. Pour toutes ces bornes, le sens de parcours des données s'effectue depuis les processeurs voisins vers le processeur PE1. La borne SS1 est reliée aux bornes AN2, AW3, AS4 et AE5 et la borne BWS1 est reliée aux bornes BN2, BW3, BS4 et BES. Ainsi, il est possible de diffuser vers les processeurs correspondants d'une part la valeur contenue dans l'élément de mémoire BM1 mais également un signal obtenu à partir du signal WS1.

On va maintenant décrire le fonctionnement des différentes unités de calcul de l'architecture, en se limitant, pour des raisons de simplification notamment, à l'interaction entre le processeur PE1 et le processeur PE2.

Lors d'un nouveau calcul (nouvelle itération) de la variable qui lui est affectée, le processeur PE1 émet le signal de lecture RI1 vers le premier moyen de mémoire (en fait vers l'élément de mémoire Z1) et vers les quatre moyens de mémoire N1, E1, S1 et W1.

Ce signal RI1 est à l'état 1. A la réception de ce signal, le transistor CMC1 est passant tandis que le transistor tc de l'élément de mémoire Z1 est bloqué ce qui permet la recopie de la valeur précédente de la variable contenue dans l'élément BM1 aux fins de sa prise en compte par le processeur PE1.

En ce qui concerne les moyens de mémoire E1, N1, S1, W1, on suppose pour l'instant qu'aucun des processeurs voisins n'est en train de mettre à jour sa variable respective. Dans une telle hypothèse, un "1" logique est présent à la première entrée de la porte ET, TN1. Puisque le signal de lecture RI1 est à l'état 1, la sortie de la porte ET est à l'état 1 ce qui rend le transistor CN1 passant (interrupteur fermé) et le transistor tc de l'élément de mémoire N1 bloqué (interrupteur ouvert). En conséquence, la valeur contenue dans l'élément de mémoire BM4 du processeur PE4 peut être écrite dans l'élément de mémoire N1 pour être prise en compte par le processeur PE1. Le fonctionnement est analogue pour les éléments E1, S1 et W1.

Après détermination de la nouvelle valeur de la variable associée au pixel P1, le processeur PE1 génère un signal de fin de calcul WS1 qui autorise l'écriture dans la bascule maître-esclave, de la nouvelle valeur calculée. Après un délai fixe par rapport à ce signal, le processeur PE1 peut réinitialiser le calcul suivant d'une façon analogue.

Supposons maintenant que le processeur PE2, affecté au pixel P2, qui fonctionne de façon indépendante par rapport au processeur PE1, cherche à lire, par l'intermédiaire de son moyen de mémoire N2, la valeur de la variable contenue dans l'élément de mémoire BM1 du processeur PE1 au moment précis où ce processeur PE1 met à jour cette variable. Dans ce cas, le signal tiré du signal WS1 (en fait son complément après passage dans l'inverseur I1), va agir vis-à-vis du processeur PE2 comme un signal d'interdiction de la prise en compte par ce processeur PE2 de la nouvelle valeur mise à jour par le processeur PE1. Plus précisément, le signal WS1 étant à l'état 1, l'état logique "0" est présent à la première entrée de la porte logique TN2. Aussi, même si le signal RI2 est à l'état 1, la sortie de la porte ET est à l'état zéro ce qui bloque le transistor CN2 et ce qui rend passant le transistor tc de l'élément de mémoire N2. En conséquence, la nouvelle valeur qui est en train d'être mise à jour par le processeur PE1 ne peut pas être écrite dans l'élément de mémoire N2. Corrélativement, le processeur PE2 lit alors une valeur disponible qui est la valeur mémorisée dans la boucle de mémorisation de l'élément de mémoire N2 et qui correspond à l'ancienne valeur stockée dans l'élément de mémoire BM1 avant mise à jour.

L'homme du métier aura donc remarqué que la communication entre les processeurs élémentaires voisins ne fait pas appel à des protocoles de requête-acquitement utilisés classiquement dans les fonctionnements asynchrones usuels. Selon l'invention, un processeur élémentaire courant peut aller lire les variables que lui destine un processeur voisin (à la seule contrainte qu'elle soit effectivement disponible au sens de la présente invention comme expliqué juste avant) à un moment quelconque, à la fois par rapport au cycle interne de calcul du processeur voisin et aussi par rapport à la génération d'itération où se trouve ce processeur voisin par rapport au processeur élémentaire courant.

Un tel pseudo asynchronisme de fonctionnement permet également d'obtenir une convergence de l'algorithme même si celui-ci peut être quasi-systématiquement modifié au niveau des générations d'itération puisqu'un processeur va utiliser les valeurs délivrées par les moyens de transfert quels que soient les rangs d'itération auxquels correspondent ces valeurs.

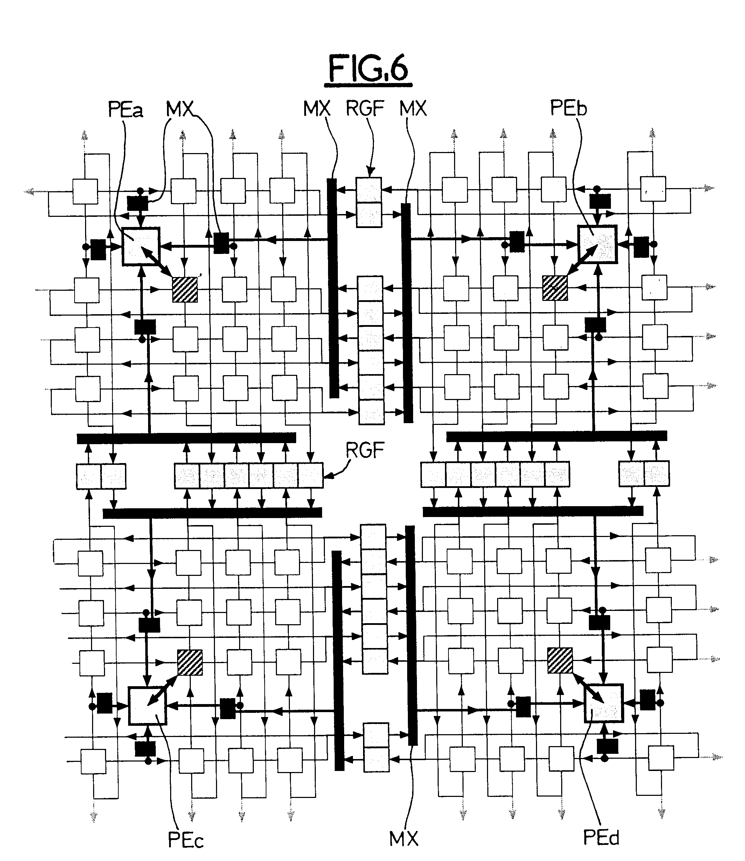

Bien que l'invention se prête aisément à l'affectation d'une unité de calcul par pixel, puisqu'il n'est pas nécessaire de prévoir des processeurs à haute performance et à fort encombrement capables de gérer un asynchronisme chlassique, il peut s'avérer contraignant dans certaines application d'utiliser un tel partitionnement. Dans ce cas, on adoptera alors un partitionnement de l'image tel qu'illustré sur la figure 5 prévoyant une affectation d'une unité de calcul par groupe de pixel. Sur la figure 5, chaque unité de calcul est affectée à un groupe de seize pixels. Bien que les différentes unités de calcul fonctionnent également en parallèle de façon indépendante les unes des autres, le calcul des valeurs successives des pixels de chaque groupe s'effectue séquentiellement dans un ordre prédéterminé. Dans le cas présent, cet ordre consiste en le balayage des colonnes les unes après les autres en commençant par la colonne de gauche dans chaque groupe. Le pixel hachuré sur cette figure correspond au pixel qui est en train d'être calculé. On remarque par ailleurs que le fonctionnement globalement parallèle et pseudo-asynchrone des unités de calcul permet éventuellement à un processeur, par exemple celui associé au groupe Gc, d'être en avance par rapport aux autres processeurs et de tenir quand même compte, en ce qui concerne les pixels situés au bord du groupe, des valeurs des pixels situés au bord du groupe voisin, par exemple du groupe Gd, dont le proceseur est en retard de deux itérations par rapport au processeur du groupe Gc.

Matériellement, la structure de chaque unité de calcul d'un groupe est pratiquement analogue à celle décrite en référence à la figure 2. En fait, on prévoit au sein de chaque groupe autant de registres qu'il y a de pixels et destinés à contenir les valeurs successives des variables affectées à ces pixels. En fonction de la place du pixel dans le groupe, le processeur correspondant, par exemple le processeur PEa utilisera la valeur de la variable contenue dans le registre affecté à ce pixel ainsi que les valeurs des quatre variables voisines. On prévoit un ensemble de multiplexeurs MX permettant lors du fonctionnement séquentiel au sein du groupe, de sélectionner les registres appropriés. L'homme du métier aura compris que lorsqu'un processeur est en train de traiter un pixel dont les voisins ne se situent pas sur l'un des bords du groupe, il n'est pas nécessaire de prévoir des moyens d'interdiction de la lecture des registres des pixels voisins puisque le processeur peut gérer lui-même la lecture et l'écriture dans les différents registres. Les moyens de transfert de l'invention peuvent alors se résumer simplement aux connexions entre les registres et le processeur ainsi qu'aux moyens d'émission des signaux de commande de lecture, internes au processeur. Cependant, le problème de l'interdiction évoqué lors du fonctionnement du premier mode de réalisation de l'invention en référence à la figure 2, se pose lorsqu'un processeur d'un groupe est en train de traiter un pixel se situant sur un bord du groupe, ce qui nécessite l'utilisation d'une variable voisine associée à un pixel voisin qui se situe dans un autre groupe géré par un autre processeur, par exemple le processeur PEb. Dans ce cas, il est avantageusement prévu un ensemble de registres auxiliaires RGF équipé de moyens d'interdiction tels que des portes logiques ET et des moyens de commutation analogues à ceux décrits en référence à la figure 2, ainsi que des moyens d'adressage commandés par l'unité de séquencement du processeur.

## ANNEXE

$$d_i^{\,k+1} = \frac{-E_i T(E_n + E_j d_j^{\,k}) + \displaystyle\sum_{(u,v)\in \, Nij} d_i^{\,k}(u,v)}{TE_i^{\,2} + 5}$$

$$d_j^{\,k+1} = \frac{-E_j T(E_n + E_i d_i^{\,k}) + \displaystyle\sum_{(u,v)\in \, Nij} d_j^{\,k}(u,v)}{TE_j^{\,2} + 5}$$

## Revendications

1. Procédé de réalisation d'un pseudo-asynchronisme de fonctionnement entre plusieurs unités de calcul (PE1, PE2) destinées ensemble à évaluer de façon itérative et cellulaire les valeurs de convergence d'une pluralité de variables respectivement associées aux différents points (P1-P5) d'un maillage prédéterminé (MA) chaque variable devant satisfaire à une relation itérative préétablie entre elle-mêmes et n variables voisines associées à n points de maillage voisins (P2-P5), dans lequel :
   - on affecte un moyen de mémoire (AM1, BM1, Z1) par point du maillage, destiné à stocker successivement toutes les valeurs de la variable associée à ce point de maillage (P1),
   - on répartit les unités de calcul de façon à affecter tout point de maillage (P1) à une unité de calcul et deux unités de calcul distinctes (PE1, PE2) à deux points voisins choisis (P1, P2) du maillage,
   - on fait fonctionner toutes les unités de calcul en parallèle et indépendamment les unes des autres, et pour chaque point courant du maillage,
      . on fait calculer par l'unité de calcul affectée à ce point courant chaque valeur successive de la variable associée à ce point courant à partir de la valeur contenue dans le moyen de mémoire affecté au point courant et de celles disponibles et issues des moyens de mémoire affectés aux points voisins du point courant, quels que soient les rangs d'itération auxquels correspondent ces valeurs disponibles, et
      . on fait stocker, par ladite unité de calcul, chaque nouvelle valeur ainsi calculée dans le moyen de mémoire associé au point courant.

2. Procédé selon la revendication 1, caractérisé par le fait qu'une première unité de calcul (PE1) interdit la prise en compte, par une deuxième unité de calcul (PE2), de ladite nouvelle valeur ainsi calculée, lorsque ladite première unité de calcul (PE1) met à jour, par la nouvelle valeur calculée, le moyen de mémoire associé au point courant, ladite deuxième unité de calcul (PE2) utilisant alors l'ancienne valeur stockée dans ledit moyen de mémoire.

3. Procédé selon la revendication 1 ou 2, caractérisé par le fait que l'on affecte une unité de calcul distincte à chaque point du maillage.

4. Procédé selon la revendication 1 ou 2, caractérisé par le fait qu'on affecte chaque unité de calcul (PEa, PEb, PEc, PEd) à un groupe de p points du maillage, et par le fait, qu'à l'intérieur de chaque groupe de points, l'unité de calcul correspondante détermine les valeurs successives de chaque point du groupe, séquentiellement dans un ordre prédéterminé.

5. Procédé selon l'une des revendications précédente, dans lequel on effectue un maillage d'une image, caractérisé par le fait que chaque point correspond à un pixel de l'image, la relation préétablie correspondant à un traitement particulier de l'image.

6. Architecture parallèle pseudo-asynchrone d'unités de calcul, destinées ensemble à évaluer de façon itérative et cellulaire les valeurs de convergence d'une pluralité de variables respectivement associées aux différents points (P1-P5) d'un maillage (MA) prédéterminé, chaque variable devant satisfaire à une relation itérative préétablie entre elle-même et n variables voisines associées à n points de maillage voisins (P2-P5), comportant une répartition des unités de calcul affectant tout point du maillage à une unité de calcul et deux unités de calcul distinctes à au moins deux points voisins choisis du maillage, et comprenant :
   - un premier moyen de mémoire (AM1, BM1, Z1), associé à chaque point courant (P1) du maillage pour stocker successivement toutes les valeurs de la variable courante du point courant, et apte à être connecté à l'unité de calcul (PE1) affectée à ce point courant (P1),
   - n moyens de transfert (N1, E1, S1, W1), respectivement reliés aux n premiers moyens de mémoire affectés aux n points voisins de chaque point courant et aptes à délivrer respectivement, à l'unité de calcul affectée audit point courant, n valeurs disponibles tirées de celles contenues dans les n premiers moyens de mémoire,
   - des moyens de commande du fonctionnement de chaque unité de calcul, aptes à faire respectivement fonctionner toutes les unités de calcul en parallèle et indépendamment les unes des autres, et
   - des moyens de traitement, respectivement incorporés au sein de chaque unité de calcul, et respectivement aptes, à partir de la valeur contenue dans le premier moyen de mémoire du point courant et de celles délivrées par les n moyens de transfert correspondants, quels que soient les rangs d'itération auxquels correspondent ces valeurs délivrées,
   - à déterminer une nouvelle valeur pour la variable associée au point courant, et
   - à stocker cette nouvelle valeur dans ledit premier moyen de mémoire du point courant.

7. Architecture selon la revendication 6, caractérisée par le fait qu'un moyen de transfert (N2, CN2) relié à un premier moyen de mémoire (BM1) d'un point (P1) du maillage auquel est affectée une première unité de calcul (PE1), et apte à délivrer une valeur disponible tirée de celle contenue dans ce premier moyen de mémoire (BN1), à une deuxième unité de calcul (PE2) affectée à un point voisin (P2) et distincte de la première, comporte des moyens d'interdiction (TN2) de la délivrance de la valeur de la variable en train d'être mise à jour par la première unité de calcul (PE1) dans le premier moyen de mémoire (BM1), et par le fait que le moyen de transfert (N2) délivre à la deuxième unité de calcul (PE2) l'ancienne valeur stockée dans le premier moyen de mémoire (BM1).

8. Architecture selon la revendication 7, caractérisée par le fait que les moyens d'interdiction sont commandés par un signal d'interdiction généré par la première unité de calcul (PE1) et issu du signal de commande d'écriture (WS1) de la nouvelle valeur calculée dans le premier moyen de mémoire (BM1).

9. Architecture selon la revendication 8, caractérisée par le fait que le moyen de transfert comporte une mémoire à verrouillage commandée par le signal de commande de lecture de la deuxième unité de calcul et par le fait que les moyens d'interdiction comportent une porte logique ET, recevant en entrée le signal de commande de lecture et le signal d'interdiction, et connectée en sortie à la mémoire à verrouillage.

10. Architecture selon l'une des revendications 6 à 9, caractérisée par le fait qu'un premier moyen de mémoire comporte une bascule maître-esclave commandée par le signal de commande d'écriture (WS1) d'une nouvelle valeur calculée dans ce premier moyen de mémoire.

**11.** Architecture selon l'une des revendications 6 à 10, caractérisée par le fait que une unité de calcul différente est affectée à chaque point du maillage,

**12.** Architecture selon l'une des revendications 6 à 10, caractérisée par le fait que chaque unité de calcul est affectée à un groupe de p points du maillage,
- par le fait que les moyens de traitement de chaque unité de calcul sont aptes à déterminer séquentiellement dans un ordre prédéterminé les valeurs successives des points de chaque groupe,
- et par le fait que l'architecture comprend un ensemble de multiplexeurs (MX) entre les différents moyens de mémoire ainsi que des registres intermédiaires (RGF) équipés de moyens d'interdiction, disposés entre les différents groupes.

## FIG.1

MA

## FIG.3

de BWS4    de SS4    vers BN2, BW3, BS4, BE5

BN1    AN1    BWS1

de SS5 >    AW1

SS1    vers AN2, AW3, AS4, AE5

PE1

BE1    < de BWS3

de BWS5 >

AE1    < de SS3

AS1    BS1

de SS2    de BWS2

**EP 0 649 101 A1**

FIG.2

12

FIG.4

FIG.5

# FIG.6

**Office européen des brevets**

## RAPPORT DE RECHERCHE EUROPEENNE

Numéro de la demande

EP 94 40 2324

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | 1989 IEEE INTERNATIONAL SYMPOSIUM ON CIRCUITS AND SYSTEMS, vol.1, 8 Mai 1989, PORTLAND, USA pages 13 - 16 D. LATTARD ET G. MAZARE 'Image reconstruction using an original asynchronous cellular array' * page 14, colonne de gauche, ligne 33 - page 15, colonne de droite, ligne 2 * * page 15, colonne de droite, ligne 24 - page 16, colonne de gauche, ligne 32 * --- | 1,3,5,6, 11 | G06F15/80 |
| A | PROCEEDINGS OF THE 1986 INTERNATIONAL CONFERENCE ON PARALLEL PROCESSING, 19 Août 1986, PENN STATE UNIVERSITY, USA pages 343 - 350 M. S. LEE AND G. FRIEDER 'Massively fault-tolerant cellular array' * page 344, colonne de gauche, ligne 30 - page 345, colonne de gauche, ligne 9 * --- | 1,2,6,7 | |
| A | PROCEEDINGS OF THE 1986 IEEE INTERNATIONAL CONFERENCE ON SYSTEMS, MAN, AND CYBERNETICS, 14 Octobre 1986, ATLANTA, USA pages 313 - 318 A. KATSAGGELOS ET AL 'VLSI implementation of an iterative image restoration algorithm' * page 316, colonne de droite, ligne 11 - page 317, colonne de droite, ligne 22 * --- | 1,6 | DOMAINES TECHNIQUES RECHERCHES (Int.Cl.6) G06F |
| A | PARALLEL ALGORITHMS & ARCHITECTURES, 14 Avril 1986, LUMINY, FRANCE pages 169 - 188 Y. ANSADE ET AL 'Algorithms dedicated to a network of asynchronous cells' * page 171, ligne 29 - page 172, ligne 7 * --- -/-- | 1,2,6,7 | |

Le présent rapport a été établi pour toutes les revendications

| Lieu de la recherche | Date d'achèvement de la recherche | Examinateur |
|---|---|---|
| LA HAYE | 30 Décembre 1994 | MICHEL T.G.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

15

**Office européen des brevets**

# RAPPORT DE RECHERCHE EUROPEENNE

Numero de la demande

**EP 94 40 2324**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | REVUE DE PHYSIQUE APPLIQUEE, vol.20, no.1, Janvier 1985, PARIS FR pages 23 - 27 F. DEVOS ET AL 'Intégration d'un processeur cellulaire pour une architecture pyramidale de traitement d'image' * le document en entier * | 1,6 | |
| A | WO-A-88 07722 (STONEFIELD SYSTEMS PLC) 6 Octobre 1988 * le document en entier * | 1,6 | |
| A | MICROPROCESSORS AND MICROSYSTEMS, vol.16, no.8, 1992, LONDON GB pages 403 - 415 N. ALLINSON ET M. SALES 'CART - a cellular automata research tool' * le document en entier * | 1-6 | |
| | | | **DOMAINES TECHNIQUES RECHERCHES (Int.Cl.6)** |

Le présent rapport a été établi pour toutes les revendications

| Lieu de la recherche | Date d'achèvement de la recherche | Examinateur |
|---|---|---|
| LA HAYE | 30 Décembre 1994 | MICHEL T.G.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
————————————————
& : membre de la même famille, document correspondant

EPO FORM 1503 03.82 (P04C03)